# EUROPEAN PATENT APPLICATION

(11) **EP 4 600 130 A1**
(43) Date of publication of application: **13.08.2025**
(21) Application number: 24874009.4
(22) Date of filing: 12.07.2024
(51) Int. Cl.: B62J 11/19, B62K 21/00

(54) **COVER PLATE FOR VEHICLE STEM AND VEHICLE**

(30) Priority: 01.10.2023 CN 202322680456 U; 08.04.2024 CN 202420705159 U
(71) Applicant: Guangzhou Tufa Network Technology Co., Ltd, Guangzhou, Guangdong 511442 (CN)
(72) Inventor: WANG, Qibiao, Guangzhou, Guangdong 511442 (CN); SHI, Yi, Guangzhou, Guangdong 511442 (CN); XIAO, Ziqiu, Guangzhou, Guangdong 511442 (CN)
(74) Representative: Fuchs Patentanwälte Partnerschaft mbB
(86) International application number: PCT/CN2024/105129
(87) International publication number: WO 2025/073190

(57) **Abstract**

The present disclosure provides a cover panel for a vehicle stem and a vehicle, where the cover panel is configured to cover the vehicle stem and connected with the vehicle stem. A shape of an internal surface of the cover panel matches a shape of an external surface of the vehicle stem. An external surface of the connected cover panel is engaged with the exposed external surface of the vehicle stem. The cover panel and the vehicle provided have the following advantages: threaded connecting pieces on the vehicle stem can be covered to improve appearance and safety, and the external surface of the mounted cover panel is engaged with and in smooth transition with the external surface of the vehicle stem to further improve the appearance.

## Description

### TECHNICAL FIELD

The present disclosure relates to the technical field of vehicles, and in particular, to a cover panel for a vehicle stem and a vehicle.

### BACKGROUND

With the development of science and technology, various commuter vehicles have emerged, bringing great convenience for people's life. Especially, short-distance commuter vehicles have been increasingly used, such as kick scooters, tricycles, self-balancing scooters, bicycles, and battery carts. These short-distance vehicles can be driven by people standing thereon, are small and portable, suitable for traveling through narrow spaces, and have advantages in ultra-short distance traveling. Typically, many threaded connection holes/openings are formed on a stem (a large vertical tube connected with a handlebar) of a short-distance commuter vehicle, and threaded connecting pieces (such as bolts, screws, and nuts) are exposed, which may affect the appearance and the safety.

Therefore, there is a need for a cover panel to cover the stem of the vehicle to improve appearance and safety.

The content in the background section is merely information known to the inventors, and neither represents that the above information has been found in the public domain prior to the filing date of the present disclosure nor represents that it can become the prior art of the present disclosure.

### SUMMARY

The present disclosure provides a cover panel for a vehicle stem that can solve the problem in the related art.

In a first aspect, the present disclosure provides a cover panel for a vehicle stem, where the cover panel is connected with the vehicle stem and covers the vehicle stem, and a shape of an internal surface of the cover panel matches a shape of an external surface of the vehicle stem.

In some exemplary embodiments, a first clamping groove that extends along an axial direction of the vehicle stem is formed on the external surface of the vehicle stem.

In some exemplary embodiments, a first clip that extends along the axial direction of the vehicle stem is disposed on the cover panel; and the first clip is clamped into the first clamping groove when the cover panel is connected with the vehicle stem.

In some exemplary embodiments, the external surface of the vehicle stem is divided by the first clamping groove into a first external surface and a second external surface, where the first external surface protrudes outwards along a radial direction relative to the second external surface.

In some exemplary embodiments, the first clamping groove includes a first side face and a second side face disposed oppositely, where the first side face is connected with the first external surface of the vehicle stem, and the second side face is connected with the second external surface of the vehicle stem.

In some exemplary embodiments, the first clip includes a first clip face and a second clip face disposed oppositely; the first clip face is connected with an external surface of the cover panel, and the second clip face is connected with the internal surface of the cover panel.

In some exemplary embodiments, when the cover panel is mounted on the vehicle stem, the first clip face abuts against the second side face and the second clip face abuts against the first side face, and the cover panel covers the first external surface; and a shape and a size of the external surface of the cover panel respectively match a shape and a size of the second external surface of the vehicle stem such that the external surface of the cover panel is in smoothly transitional connection with the second external surface of the vehicle stem.

In some exemplary embodiments, the vehicle stem includes a first stem portion and a second stem portion, where an external surface of the first stem portion forms the first external surface; and an external surface of the second stem portion forms the second external surface, the second stem portion has a periphery protruding from the first stem portion such that a step is formed at a connection of the second stem portion and the first stem portion; and the first clamping groove is disposed at the step.

In some exemplary embodiments, the first clamping groove further includes a third side face connected between the first side face and the second side face; the first clip further includes a third clip face connected between the first clip face and the second clip face; and when the cover panel is mounted on the vehicle stem, the third side face fits to the third clip face.

In some exemplary embodiments, the external surface of the vehicle stem further includes at least one positioning hole; at least one positioning lug boss is disposed on the internal surface of the cover panel; the at least one positioning lug boss matches the at least one positioning hole; and when the cover panel is mounted on the vehicle stem, the at least one positioning lug boss is inserted into the at least one positioning hole.

In some exemplary embodiments, the external surface of the vehicle stem further includes at least one second clamping groove; at least one second clip is disposed on the internal surface of the cover panel; the at least one second clip matches the at least one second clamping groove; and when the cover panel is mounted on the vehicle stem, the at least one second clip is clamped with the at least one second clamping groove.

In a second aspect, the present disclosure provides a vehicle, including: a vehicle stem; and the cover panel according to the first aspect of the present disclosure, the cover panel covering an external surface of the vehicle stem and connected with the vehicle stem.

To sum up, the present disclosure provides a cover panel for a vehicle stem and a vehicle, where the cover panel is configured to cover the vehicle stem and connected with the vehicle stem. A shape of an internal surface of the cover panel matches a shape of an external surface of the vehicle stem. The cover panel for a vehicle stem and the vehicle provided in the present disclosure have the advantage that threaded connecting pieces on the vehicle stem can be covered to improve appearance and safety.

Other functions of the cover panel for a vehicle stem and the vehicle provided in the present disclosure will be enumerated in part in the following description. According to the description, the contents presented by reference numerals and examples will be apparent for those of ordinary skill in the art. Creative aspects of the cover panel for a vehicle stem and the vehicle provided in the present disclosure may be fully explained by practice or by using the methods, devices, and combinations described in the following detailed examples.

### BRIEF DESCRIPTION OF THE DRAWINGS

To describe the technical solutions in some exemplary embodiments of this disclosure more clearly, the following briefly describes the accompanying drawings required for describing some exemplary embodiments. Apparently, the accompanying drawings in the following description show merely some exemplary embodiments of this disclosure, and a person of ordinary skill in the art may still derive other drawings from these accompanying drawings without creative efforts.
FIG. 1 is an oblique view of a vehicle provided according to some exemplary embodiments of the present disclosure;
FIG. 2 is an oblique view of a vehicle stem provided according to some exemplary embodiments of the present disclosure;
FIG. 3 is a front view of a vehicle stem provided according to some exemplary embodiments of the present disclosure;
FIG. 4 is a top view of a vehicle stem provided according to some exemplary embodiments of the present disclosure;
FIG. 5 is an oblique view of a cover panel provided according to some exemplary embodiments of the present disclosure;
FIG. 6 is a front view of an internal surface of a cover panel provided according to some exemplary embodiments of the present disclosure;
FIG. 7 is a top view of a cover panel provided according to some exemplary embodiments of the present disclosure;
FIG. 8 is an oblique view of a cover panel mounted on a vehicle stem provided according to some exemplary embodiments of the present disclosure; and
FIG. 9 is a top view of a cover panel mounted on a vehicle stem provided according to some exemplary embodiments of the present disclosure.

### DETAILED DESCRIPTION

The following description provides specific application scenarios and requirements of this disclosure, to enable a person skilled in the art to make and use content of this disclosure. Various partial modifications to the disclosed exemplary embodiments would be obvious to a person skilled in the art. General principles defined herein can be applied to other embodiments and applications without departing from the spirit and scope of this disclosure. Therefore, this disclosure is not limited to the illustrated embodiments, but is to be accorded the widest scope consistent with the claims.

The terms used herein are only intended to describe specific exemplary embodiments and are not restrictive. For example, as used herein, singular forms "a", "an", and "the" may also include plural forms, unless otherwise clearly specified in a context. When used in this disclosure, the terms "comprise", "include", and/or "contain" indicate the presence of associated features, integers, steps, operations, elements, and/or components, but do not exclude the presence of one or more other features, integers, steps, operations, elements, components, and/or groups or addition of other features, integers, steps, operations, elements, components, and/or groups to the system/method.

In view of the following description, these features and other features of this disclosure, operations and functions of related elements of structures, and economic efficiency in combining and manufacturing components can be significantly improved. All of these form a part of this disclosure with reference to the drawings. However, it should be understood that the drawings are only for illustration and description purposes and are not intended to limit the scope of this disclosure. It should also be understood that the drawings are not drawn to scale.

Flowcharts used in this disclosure show operations implemented by a system according to some exemplary embodiments of this disclosure. It should be understood that operations in the flowcharts may be implemented not in the order as shown. Conversely, the operations may be implemented in a reverse order or simultaneously. In addition, one or more other operations may be added to the flowcharts, and one or more operations may be removed from the flowcharts.

In this disclosure, "X includes at least one of A, B, or C" means: X includes at least A, or X includes at least B, or X includes at least C. In other words, X may include only any one of A, B, and C, or may include any combination of A, B, and C, and other possible content or elements. Any combination of A, B, and C may be A, B, C, AB, AC, BC, or ABC.

In the present disclosure, unless otherwise explicitly specified, an association relationship between structures may be a direct association relationship or an indirect association relationship. For example, for the description "A is connected to B", unless it is explicitly described that A is directly connected to B, it will be construed as that A may be directly connected to B or indirectly connected to B. In another example, for the description "A is over B", unless it is explicitly described that A is directly above B (A and B are adjacent and A is above B), it will be construed as that A may be directly above B, or A may be indirectly over B (A and B are spaced apart by other element and A is above B), and so on.

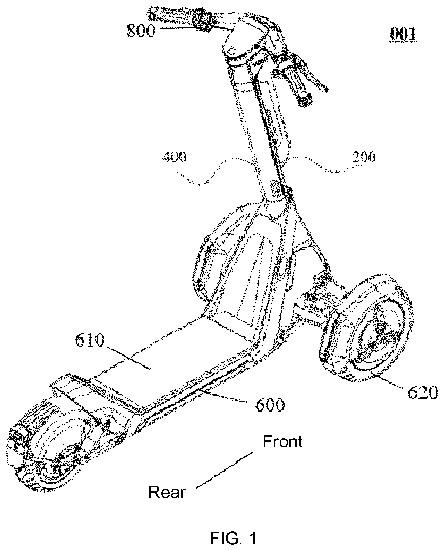

A cover panel provided in the present disclosure may be mounted on a vehicle stem of a vehicle, in particular a short-distance vehicle, such as a scooter, a tricycle, a balance car, a bicycle, and an electric cart. FIG. 1 is an oblique view of a vehicle 001 provided according to some exemplary embodiments of the present disclosure. The vehicle 001 may be a kick scooters, a tricycle, a self-balancing scooters, a bicycle, or an electric cart. The vehicle 001 may include a vehicle body. The vehicle body may include a vehicle stem 200 and a cover panel 400 provided in the present disclosure.

For ease of understanding and description, the vehicle refers to a short-distance commuter vehicle in the following description of the present disclosure, unless otherwise specifically stated.

The vehicle body can be a base and a main body structure of the vehicle. The vehicle body may be configured to connect various parts and components of the vehicle, and may also be configured to carry a user. The cover panel 400 can cover an external surface of the vehicle stem 200 and is connected with the vehicle stem 200.

The base of the vehicle body is generally designed as a pedestal structure 600 capable of carrying a user. The pedestal structure 600 is generally provided with a standing area 610 for the user to stand. As shown in FIG. 1, the standing area 610 may be of a smooth flat structure, i.e., a surface of the standing area is a flat surface. The standing area 610 may also include a rough structure that may be formed by the surface of the standing area 610, or may be provided on the surface of the standing area. The rough structure plays a role in enhancing a force of friction between the user and the standing area 610 and preventing the user from sliding. In some exemplary embodiments, the rough structure may include criss-crossed raised stripes formed on the surface of the standing area 610. In some exemplary embodiments, the rough structure may be a honeycomb shaped support plate provided on the surface of the standing area 610. The support plate may be removed from the vehicle body. In some exemplary embodiments, the rough structure may be a non-slip film or non-slip mat provided on the surface of the standing area 610.

A wheel 620 for the vehicle to move may be disposed at the bottom of the pedestal structure 600. The number and arrangement of the wheel 620 are not limited herein. For example, in the example shown in FIG. 1, three wheels 620 are disposed under the pedestal structure 600, where two wheels 620 are located at a front end of the pedestal structure 600, and one wheel 620 is located at a rear end of the pedestal structure 600. In another example, in some exemplary embodiments, the pedestal structure 600 may be provided with four wheels 620, two for each of the front end and the rear end of the pedestal structure 600.

The main body structure of the vehicle can be other parts of the vehicle body than the pedestal structure 600. For example, the main body structure may include a vehicle stem 200, a handlebar 800, and the like. The vehicle stem 200 is generally used as a connection structure between the handlebar 800 and the pedestal structure 600 to support and connect the handlebar 800; in addition, the vehicle stem 200 may also be used as a connecting piece for other parts and components. The vehicle stem 200 has a plurality of connecting holes; there may also be a plurality of connecting pieces. In some exemplary embodiments of the present disclosure, the cover panel 400 is disposed on the vehicle stem 200 so that the connecting holes and the connecting pieces can be well covered, thereby improving the appearance the safety of the vehicle.

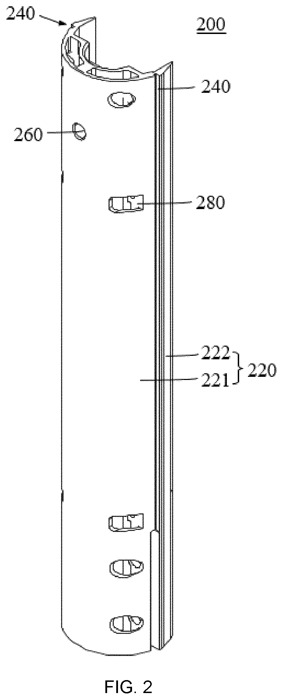

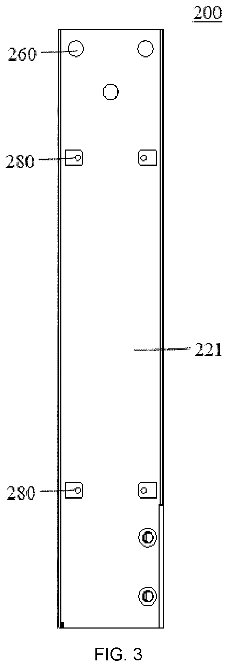

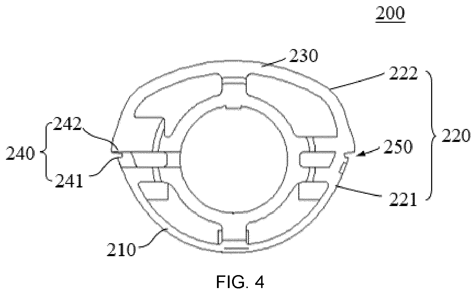

FIG. 2 is an oblique view of a vehicle stem 200 provided according to some exemplary embodiments of the present disclosure; FIG. 3 is a front view of a vehicle stem 200 provided according to some exemplary embodiments of the present disclosure; and FIG. 4 is a top view of a vehicle stem 200 provided according to some exemplary embodiments of the present disclosure. As shown in FIG. 2 to FIG. 4, the vehicle stem 200 may be in the form of a cylinder. A cross-sectional shape of the vehicle stem 200 may be any shape, such as a circle, a rounded square, an ellipse, etc. A material of the vehicle stem 200 may be a metal material, such as carbon steel, aluminum alloy, aeronautical aluminum alloy, or carbon fiber, etc. An external surface of the vehicle stem 200 may have a hole(s) for a threaded connecting piece.

The vehicle stem 200 is generally designed as a linear cylinder structure, i.e., the vehicle stem 200 is formed by a cross section in a certain shape extending along a straight line. In consideration of the overall structural shape and the practical use of the vehicle body, the vehicle stem 200 may also be of a bent cylinder structure. For example, in some exemplary embodiments, a seat may be further disposed on the standing area 610 so that the user can sit on the pedestal structure 600 to manipulate the vehicle. This makes room for the legs of the user. The vehicle stem 200 may be designed into a bent shape protruding outward at a position corresponding to the legs of the user.

In addition, in order to meet the requirements of users with different heights, the height of the vehicle stem 200 may also be determined according to actual requirements. For example, the vehicle stem 200 may be designed as a telescopic structure.

As shown in FIG. 2 to FIG. 4, a first clamping groove 240 may be formed on the external surface 220 of the vehicle stem 200. The first clamping groove 240 may extend along an axial direction of the vehicle stem 200. In order to improve the reliability of mounting the cover panel 400 on the vehicle stem 200, the number of first clamping grooves 240 may be 2 or more than 2. FIG. 2 to FIG. 4 illustrate 2 first clamping grooves 240. The first clamping groove 240 may be a groove penetrating through the vehicle stem 200 in the axial direction, or may be a groove not penetrating through or only penetrating through at one end. The 2 first clamping grooves 240 may be distributed along a circumferential direction of the vehicle stem 200. The first clamping groove 240 may divide the external surface 220 of the vehicle stem 200 into a first external surface 221 and a second external surface 222. In some exemplary embodiments, the first external surface 221 and the second external surface 222 are surfaces in smooth transition with each other. That is, a continuous external surface is divided by the first clamping groove 240 into the first external surface 221 and the second external surface 222. In some exemplary embodiments, the first external surface 221 may protrude outward along a radial direction relative to the second external surface 222. A distance between the first external surface 221 and a center of the vehicle stem 200 may be greater than that between the second external surface 222 and the center of the vehicle stem 200. That is, the first external surface 221 is higher than and protrudes from the second external surface 222. A threaded connecting hole of the vehicle stem 200 may be formed in the first external surface 221. That is to say, the cover panel 400 may cover the first external surface 221 of the vehicle stem 200. The first clamping groove 240 may include a first side face 241 and a second side face 242 disposed oppositely. The first side face 241 may be connected with the first external surface 221 of the vehicle stem 200. The second side face 242 may be connected with the second external surface 222 of the vehicle stem 200.

In the above description, the first clamping groove 240 is formed by recessing inward from the external surface 220 of the vehicle stem 200 along a radial direction, this divides the external surface 220 into the first external surface 221 and the second external surface 222. It thus can be understood that for the vehicle stem 200, the first clamping groove 240, the first external surface 221 and the second external surface 222 constitute a peripheral profile of a cross section of the vehicle stem 200. The first clamping groove 240 extends along an axial direction of the vehicle stem 200, which can form a simple and stable connection structure, and it is convenient to install the cover panel 400. Moreover, it can ensure that the cover panel 400 is stably connected to the vehicle stem 200. It needs to be noted that the extending along the axial direction of the vehicle stem 200 herein does not mean that the first clamping groove 240 must be a linear groove. In some exemplary embodiments, for example, to adapt to a bent vehicle stem 200, the first clamping groove 240 may also be bent.

The above is a general description that the first external surface 221 protrudes outwards along the radial direction relative to the second external surface 222. That is, the first external surface 221 overall protrudes relative to the second external surface 222. This design of outward protruding is based on the consideration of space. Taking the circular cross section of the vehicle stem 200 as an example, it needs to be understood that the circle mentioned herein may not be a normal circle, and may include an approximate circle. When a user stands on the standing area 610 or sits on the seat, the first external surface 221 is the surface facing the user. In order to ensure that the structure and function thereof are located close to the user, more functional structural components or functional elements may be arranged in the vicinity of the first external surface 221, and based on such a design that the first external surface 221 has a greater radius, more assembly space may be available for more functional structural components or functional elements.

In the above description, the first clamping groove 240 may act to realize the connection with the cover panel 400. It can be appreciated that all structural shapes of the first clamping groove 240 that can realize the connection of the cover panel 400 with the vehicle stem 200 fall within the scope of the present disclosure. In order to simplify the assembly and the structure, the first side face 241 and the second side face 242 of the first clamping groove 240 may be two opposite flat faces, or may be inclined faces or non-flat faces. FIG. 2 to FIG. 4 illustrate that the first side face 241 and the second side face 242 are two opposite flat faces. After the cover panel 400 is mounted on the vehicle stem 200, the cover panel 400 can be clamped by the first side face 241 and the second side face 421.

It needs to be noted that in addition to the first clamping groove 240, other structures may also be provided on the vehicle stem 200 to facilitate installing the cover panel 400, such as a magnetic attraction structure, a concave-convex structure, or a snap-fit structure. The magnetic attraction structure may be arranged such that magnetic components are disposed on the vehicle stem 200 and the cover panel 400, respectively. The concave-convex structure may be arranged such that a protrusion is disposed on one of the vehicle stem 200 and the cover panel 400 and a recess is formed in the other one, such that the protrusion can be inserted into the recess to realize the installation. The snap-fit structure may refer to use of elastic deformation for clamping in place. For example, at least a portion of the cover panel 400 that needs to be clamped to the vehicle stem may be formed by an elastic material.

In some exemplary embodiments, the external surface 220 of the vehicle stem 200 may further include at least one positioning hole 260. Specifically, the at least one positioning hole 260 may be formed on the first external surface 221. The number of positioning holes 260 may be any number, such as 1, 2, 3, or even more. The at least one positioning hole 260 may be distributed at any position on the first external surface 221. For example, they may be distributed at two ends of the first external surface 221 along the axial direction, or distributed uniformly or non-uniformly along the axial direction.

In some exemplary embodiments, the external surface of the vehicle stem 200 may further include at least one second clamping groove 280. Specifically, the at least one second clamping groove 280 may be formed on the first external surface 221. The number of second clamping grooves 280 may be any number, such as 1, 2, 3, or even more. The at least one second clamping groove 280 may be distributed at any position on the first external surface 221. For example, they may be distributed at two ends of the first external surface 221 along the axial direction, or distributed uniformly or non-uniformly along the axial direction.

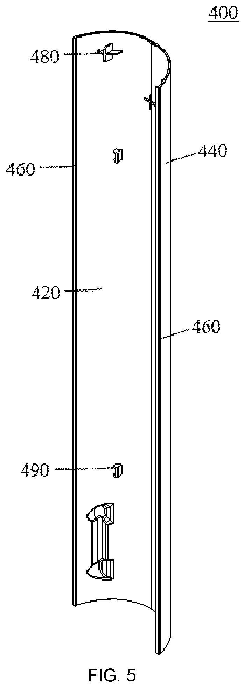

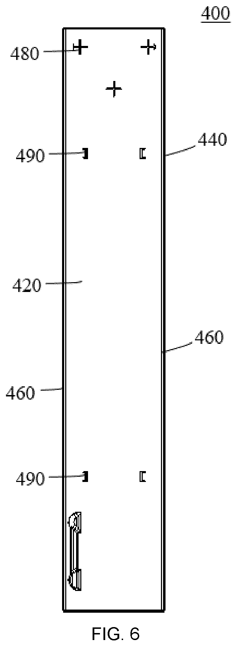

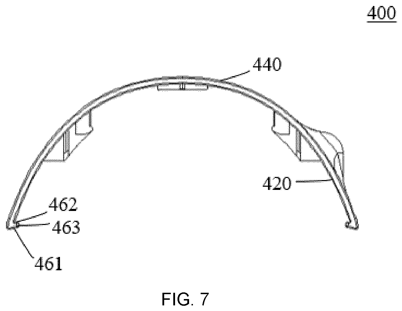

FIG. 5 is an oblique view of a cover panel 400 provided according to some exemplary embodiments of the present disclosure; FIG. 6 is a front view of an internal surface 420 of a cover panel 400 provided according to some exemplary embodiments of the present disclosure; and FIG. 7 is a top view of a cover panel 400 provided according to some exemplary embodiments of the present disclosure. As shown in FIG. 5 to FIG. 7, the cover panel 400 may include an internal surface 420 and an external surface 440. A shape and a size of the cover panel 400 may match a shape and a size of the vehicle stem 200. A better appearance can be provided while the vehicle stem 200 is covered. Specifically, the cover panel 400 may cover the first external surface 221 of the vehicle stem 200. Therefore, a shape and a size of the internal surface 420 of the cover panel 400 match a shape and a size of the first external surface 221 of the vehicle stem 200 such that a good appearance is provided while ensuring reliable mounting. After the cover panel 400 is mounted to the vehicle stem 200, the external surface 440 of the cover panel 400 may be exposed. To provide a better appearance of the vehicle, a shape and a size of the external surface 440 of the cover panel 400 may match a shape and a size of the second external surface 222 of the vehicle stem 200 such that the external surface 440 of the cover panel 400 can be in smooth transition with the second external surface 222 of the vehicle stem 200.

In the above description, for the mounting of the cover panel 400, on the one hand, the connection between the internal surface of the cover panel 400 and the first external surface 221 of the vehicle stem 200 needs to be ensured; on the other hand, the joining/engaging of the external surface of the cover panel 400 and the other exposed faces of the vehicle stem 200 needs to be considered after the cover panel 400 is mounted in place. For the former, the shape and the size of the internal surface 420 of the cover panel 400 and the shape and the size of the first external surface 221 of the vehicle stem 200 can be designed to match each other, e.g., both are arc surfaces. For the latter, specific design may be made based on the structural design of the vehicle stem 200 and the cover panel 400, e.g., the vehicle stem 200 may be designed in size and shape as a structure matching the cover panel 400.

In particular, in some exemplary embodiments, as shown in FIG. 2 and FIG. 4, the vehicle stem 200 includes a first stem portion 210 and a second stem portion 230. An external surface of the first stem portion 210 forms the first external surface 221, and an external surface of the second stem portion 230 forms the second external surface 222. The second stem portion 230 may have a periphery protruding from the first stem portion 210 such that a step 250 is formed at the connection between the second stem portion 230 and the first stem portion 210. The first clamping groove 240 may be disposed at the step 250.

The above structural design is such that the periphery of the first stem portion 210 is recessed into the second stem portion 230. As shown in FIG. 4, viewed from the cross section of the vehicle stem 200, an outer edge corresponding to the first stem portion 210 may be recessed into a corresponding outer edge of the second stem portion 230. This difference in size provides a mounting space for the cover panel 400. The cover panel 400 thus can make up for the difference in size such that the cover panel 400 is flush with the outer edge of the second stem portion 230. On the whole, the outer surface of the cover panel 400 is in smooth transition with the second external surface 222.

To form the above structural relationship between the first stem portion 210 and the second stem portion 230, the first stem portion 210 and the second stem portion 230 may be manufactured separately, where a diameter of the cross section of the first stem portion 210 may be greater than that of the second stem portion 230. The vehicle stem 200 may also be manufactured as a whole, and then a portion may be removed from a position corresponding to the first stem portion 210 in a cutting step or the like such that the first stem portion 210 is recessed into the second stem portion 230.

As shown in FIG. 5 to FIG. 7, a first clip 460 may be further provided on the cover panel 400. The number and positions of first clips 460 may match the number and positions of first clamping grooves 240. The first clip 460 extends along the axial direction of the vehicle stem 200. When the cover panel 400 is connected to the vehicle stem 200, the first clip 460 is clamped into the first clamping groove 240. The first clip 460 includes a first clip face 461 and a second clip face 462 arranged oppositely. The first clip face 461 is connected with the external surface 440 of the cover panel 400. The second clip face 462 is connected with the internal surface 420 of the cover panel 400.

It needs to be noted that the cover panel 400 shown in FIG. 6 to FIG. 7 may be designed correspondingly to the vehicle stem 200 shown in FIG. 2 to FIG. 4. This corresponding design relationship is not limited to the examples shown in the figures. When the vehicle stem 200 is the bent vehicle stem 200 described above or other possible forms of the vehicle stems 200, the cover panel 400 should be changed in shape. In addition, a shape and a size of the first clip 460 should also be changed according to different first clamping grooves 240.

In some exemplary embodiments, as shown in FIG. 4 and FIG. 7, the first clamping groove 240 may further include a third side face 244 connected between the first side face 241 and the second side face 242. The first clip 460 may further include a third clip face 463 connected between the first clip face 461 and the second clip face 462. When the cover panel 400 is mounted on the vehicle stem 200, the third side face 244 fits to the third clip face 463. This design has the following advantages: the engaging areas between the vehicle stem 200 and the cover panel 400 are increased, thus the engaging strength thereof can be improved, and the stability of the connection therebetween can also be improved.

In some exemplary embodiments, at least one positioning lug boss 480 may be provided on the internal surface 420 of the cover panel 400. The at least one positioning lug boss 480 matches the at least one positioning hole 260. Specifically, the number and position of the at least one positioning lug boss 480 may match the number and position of the at least one positioning hole 260. When the cover panel 400 is mounted on the vehicle stem 200, the at least one positioning lug boss 480 is inserted into the at least one positioning hole 260.

In some exemplary embodiments, at least one second clip 490 may be provided on the internal surface 420 of the cover panel 400. The at least one second clip 490 matches the at least one second clamping groove 280. Specifically, the number and position of the at least one second clip 490 may match the number and position of the at least one second clamping groove 280. When the cover panel 400 is mounted on the vehicle stem 200, the at least one second clip 490 is clamped with the at least one second clamping groove 280.

It needs to be noted that the cover panel 400 may be a complete cover panel, or may be a plurality of cover panels. The plurality of cover panels may cooperate with one another to achieve the above-mentioned function.

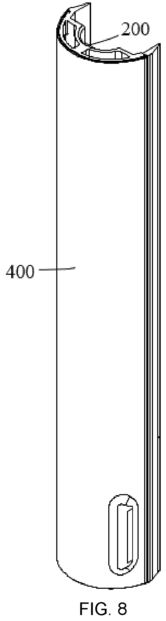

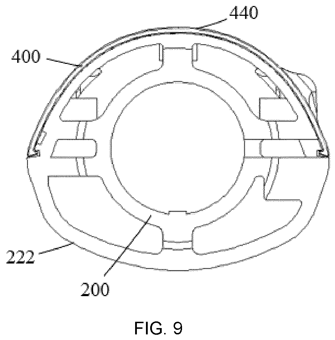

FIG. 8 is an oblique view of a cover panel 400 mounted on a vehicle stem 200 provided according to some exemplary embodiments of the present disclosure; and FIG. 9 is a top view of a cover panel 400 mounted on a vehicle stem 200 provided according to some exemplary embodiments of the present disclosure. As shown in FIG. 8 and FIG. 9, when the cover panel 400 is mounted on the vehicle stem 200, the first clip face 461 abuts against the second side face 242, and the second clip face 462 abuts against the first side face 241. The cover panel 400 may cover the first external surface 221 of the vehicle stem 200. The shape and the size of the external surface 440 of the cover panel 400 match the shape and the size of the second external surface 222 of the vehicle stem 200 such that the external surface 440 of the cover panel 400 is in smooth transition with the second external surface 222 of the vehicle stem 200. The external surface 460 of the cover panel 400 can be smoothly engaged with the second external surface 222 of the vehicle stem 200, such that the connection of the external surface 460 of the cover panel 400 with the second external surface 222 of the vehicle stem 200 is smooth with a good appearance. In this way, the safety is improved while a good appearance is provided.

It needs to be noted that for the details of the cover panel 400 not mentioned in the device embodiments of the present disclosure, they may be referred to in the drawings of the present disclosure, which will not be repeated herein.

In summary, the present disclosure provides the cover panel 400 and the vehicle 001, where the cover panel 400 is configured to cover the vehicle stem 200 and connected with the vehicle stem 200. The shape of the internal surface 220 of the cover panel 400 matches the shape of the first external surface 221 of the vehicle stem 200. The external surface 440 of the connected cover panel 400 is engaged with and in smooth transition with the exposed second external surface 222 of the vehicle stem 200. The cover panel 400 and the vehicle 001 provided in the present disclosure have the advantage that threaded connecting pieces on the vehicle stem 200 can be covered to improve appearance the safety.

The foregoing describes some specific exemplary embodiments of the present disclosure. Other embodiments fall within the scope of the appended claims. In some cases, the actions or steps set forth in the claims may be performed in sequences different from those shown in the exemplary embodiments and may still achieve expected results. In addition, the processes depicted in the accompanying drawings do not necessarily require the specific orders or sequential orders shown for achieving the expected results. In some implementations, multitasking and parallel processing are also possible or may be advantageous.

In summary, after reading this detailed disclosure, a person skilled in the art can understand that the foregoing detailed disclosure is presented by way of example only, but it is not limited thereto. In addition, a person skilled in the art can understand that the present disclosure intends to cover various changes, improvements and modifications of the embodiments. These changes, improvements and modifications are intended to be covered in this disclosure and are within the spirit and scope of this disclosure.

In addition, some specific terms in this disclosure have been used to describe the exemplary embodiments of this disclosure. For example, "one embodiment", "an embodiment" and/or "some embodiments" mean that a specific feature, structure, or characteristic described in the embodiment(s) may be included in at least one embodiment of the present application. Therefore, it can be emphasized and should be understood that two or more references to "an embodiment" or "one embodiment" or "an alternative embodiment" in various parts of this disclosure do not necessarily all refer to the same embodiment. In addition, specific feature, structure, or characteristic may be appropriately combined in one or more embodiments of the present disclosure.

It should be understood that in the foregoing description of exemplary embodiments of the present application, to help understand a feature, and for the purpose of simplifying the present application, the present application sometimes combines various features in a single embodiment, a drawing, or description thereof. However, this does not mean that the combination of these features is necessary. It is possible for a person skilled in the art to mark some of the devices as a single embodiment for understanding when reading this disclosure. In other words, some exemplary embodiments in this disclosure can also be understood as an integration of multiple sub-embodiments. It is also possible that each sub-embodiment has less than all of the features of a single preceding disclosed embodiment..

Each patent, patent application, publication of patent applications, and other materials referenced in this disclosure, such as articles, books, specifications, publications, documents, articles, etc., except for any historical litigation documents related thereto, any identical historical litigation documents that may be inconsistent or conflicting with this disclosure, or any identical historical litigation documents that may have a restrictive effect on the widest scope of the claims may be incorporated herein by reference and used for all purposes now or in the future associated with this disclosure. In addition, if the description, definition, and/or use of terms in any associated materials contained herein is inconsistent with or in conflict with that in this document, the terms in this document shall prevail.

Finally, it should be understood that the embodiments disclosed herein is an explanation of the principles of the present disclosure. Other modified embodiments are also within the scope of this disclosure. Therefore, the embodiments disclosed in this disclosure are merely examples rather than limitations. A person skilled in the art can adopt alternative configurations according to the embodiments of the present disclosure in order to implement this disclosure. Therefore, the embodiments of this disclosure are not limited to those explicitly described herein.

## Claims

1. A cover panel for a vehicle stem, wherein the cover panel is connected with the vehicle stem and covers the vehicle stem; and
a shape of an internal surface of the cover panel matches a shape of an external surface of the vehicle stem.

2. The cover panel according to claim 1, wherein a first clamping groove extending along an axial direction of the vehicle stem is formed on the external surface of the vehicle stem.

3. The cover panel according to claim 2, wherein a first clip extending along the axial direction of the vehicle stem is disposed on the cover panel; and the first clip is clamped into the first clamping groove when the cover panel is connected with the vehicle stem.

4. The cover panel according to claim 3, wherein the external surface of the vehicle stem is divided by the first clamping groove into a first external surface and a second external surface, and the first external surface protrudes outwards along a radial direction relative to the second external surface.

5. The cover panel according to claim 4, wherein the vehicle stem includes:
a first stem portion with an external surface forming the first external surface; and
a second stem portion with an external surface forming the second external surface, wherein
the second stem portion has a periphery protruding from the first stem portion such that a step is formed at a connection between the second stem portion and the first stem portion, and the first clamping groove is disposed at the step.

6. The cover panel according to claim 4, wherein the first clamping groove includes a first side face and a second side face disposed oppositely, the first side face is connected with the first external surface of the vehicle stem, and the second side face is connected with the second external surface of the vehicle stem.

7. The cover panel according to claim 5, wherein the first clip includes a first clip face and a second clip face disposed oppositely; the first clip face is connected with an external surface of the cover panel, and the second clip face is connected with the internal surface of the cover panel.

8. The cover panel according to claim 7, wherein when the cover panel is mounted on the vehicle stem, the first clip face abuts against the second side face and the second clip face abuts against the first side face, the cover panel covers the first external surface; and a shape and a size of the external surface of the cover panel respectively match a shape and a size of the second external surface of the vehicle stem, such that the external surface of the cover panel is in smoothly transitional connection with the second external surface of the vehicle stem.

9. The cover panel according to claim 7, wherein the first clamping groove further includes a third side face connected between the first side face and the second side face; the first clip further includes a third clip face connected between the first clip face and the second clip face; and when the cover panel is mounted on the vehicle stem, the third side face fits to the third clip face.

10. The cover panel according to claim 1, wherein the external surface of the vehicle stem further includes at least one positioning hole; at least one positioning lug boss is disposed on the internal surface of the cover panel; the at least one positioning lug boss matches the at least one positioning hole; and when the cover panel is mounted on the vehicle stem, the at least one positioning lug boss is inserted into the at least one positioning hole.

11. The cover panel according to claim 1, wherein the external surface of the vehicle stem further includes at least one second clamping groove; at least one second clip is disposed on the internal surface of the cover panel; the at least one second clip matches the at least one second clamping groove; and when the cover panel is mounted on the vehicle stem, the at least one second clip is clamped with the at least one second clamping groove.

12. A vehicle, comprising:
a vehicle stem; and
the cover panel according to any one of claims 1-11, wherein the cover panel covers an outer surface of the vehicle stem and is connected with the vehicle stem.
